# EUROPEAN PATENT APPLICATION

(11) **EP 1 030 521 A1**
(43) Date of publication of application: **23.08.2000**
(21) Application number: 00850029.0
(22) Date of filing: 16.02.2000
(51) Int. Cl.: H04N 7/18, F25D 23/00

(54) **Device and procedure for information on the contents in a cabinet**

(30) Priority: 19.02.1999 SE 9900582
(71) Applicant: Aktiebolaget Electrolux (publ), 105 45 Stockholm (SE)
(72) Inventor: Roseen, Rutger, 115 27 Stockholm (SE)
(74) Representative: Svahn, Göran

(57) **Abstract**

The invention relates to a device and procedure to get information on what is stored in a cabinet or the like. The device is made up of a combination of a cabinet (110), a camera (112), a display unit (106), and an image processing unit (108). The camera (112) is placed in a position, from where it can take pictures of the contents of the cabinet (110), and the camera is connected to the image processing unit (108). The device comprises a computer terminal (104) with a display unit (106) built-in, or separate, and the computer terminal is connected to the image processing unit (108). The connections between the computer terminal, the display unit, the image processing unit and the cabinet can be of different nature, e.g. permanent wire, radio link or any other means of communication.

The procedure implies i.a. that there will be taken a picture of the contents of the cabinet. The picture will then be exposed on the display unit, and the image processing unit transforms the picture into a list of contents, which can be changed to a shopping list presented on the display unit.

## Description

### Field of technology

The present invention concerns a device giving information on the contents in a cabinet, specifically a refrigerator cabinet, and a procedure to retrieve such information.

### Technical state of the art

In relation to purchase of food-stuffs there is a need to know, what is in the refrigerator at home. This problem has till now been solved in a manual way including certain steps:
1. Make an inventory of what is in e.g. the refrigerator cabinet.
2. Write a shopping list.
3. Do the shopping.
The list can be hand-written or memorized, and will be revised according to information received at the time of doing the shopping. This procedure has some drawbacks. Some people find it troublesome to handle notes-paper, and to read what is written on those. Frequently, the person shopping has to remember items practically always to be bought. As a person does a visual inventory, the probability is high he will not be reminded what is missing, but sees what is still there in the cabinet. At the time of the inventory, the door of the cabinet has to be open for quite a while which entails at a refrigerator that it consumes additional energy to be chilled to normal temperature. This has as a consequence that the purchase of food-stuff and other necessities will be unnecessary at random, and guided more by what is exposed in the shop than by real need.

In the Japanese patent application JP-A 8-049958 "Refrigerator with inner state display device" by Kusuno Koji it is presented a refrigerator cabinet with an internally mounted camera and a display on its outside showing what is in the cabinet.

Other systems are those already utilised in commerce, such as bar code systems with intended reading-instruments. If those systems were transferred to home conditions, they would be manual since the goods had to be registered at the time those were put into the cabinet, and likewise as they were taken out.

Another system could be electronic labels, called "tags", which transmit information for registration to a receiver in the cabinet. At present those labels are too expensive to be used in this context. If a recirculation should take place, you would be directed to manually moving the labels between different articles.

### Description of the invention

The present invention is intended to solve the problem of automatically keeping track of what there is in a cabinet.

Another object of the invention is to automatically produce a written list of articles stored in the cabinet.

A further object of the invention is to automatically produce a list of goods usually needed.

A further object of the invention is to produce an image of, what there is in the cabinet.

The aim of the present invention is in a simply way to show what is inside the cabinet, and to print a list containing what is needed for purchase.
The present invention preferably relates to a device system giving information on, which articles there are in a cabinet, presenting those by way of a list, or a list of the goods needed to be purchased.

The invention can i.a. be used to inform on, at a certain point of time, what is stored in the cabinet, by way of presenting an image. This image will show the contents of the cabinet, and out of the image it is possible to receive a shopping list.

The device system according to the invention is composed of a cabinet and a camera in the cabinet or outside, but pointed at the cabinet interior when its door is open. Further, the camera is connected to a unit for image processing or analysing. This unit produces an image which can be shown on a TV screen, a mobile phone display, an internet connected visual display unit, or other electronic media. The image can be processed so information can be retrieved on which articles there are in the cabinet. As this is established, a computer produces a list of goods missing.

The invention comprises a device and a procedure to learn the contents of a cabinet. Calling this a system, that is composed of a cabinet, a camera, a display unit and an image analysing unit, all components being governed by a computer. The camera is located in such a manner so it can take a picture of the cabinet contents. The camera is connected to the image analysing unit. The computer with integrated, or separate display, is connected to the image analysing unit.

The procedure embraces i.a. to take a picture of the cabinet contents, to show that picture on a display, whereupon the image analysing unit transforms the picture into a list of goods, which the computer converts into a purchase list, which will be shown on the display.

One advantage of the invention is that it automatically gives information on the contents of the cabinet.

Another advantage of the invention is that it automatically gives a list of, what is needed to be purchased.

A further advantage of the invention is that it automatically gives a list of goods, which usually need to be purchased.

An additional advantage offered by the invention is that it can produce a picture of, what is in the cabinet.

The invention will in the following more particularly be explained with respect to preferred embodiments and with reference to the accompanying drawing.

### Brief description of the drawing

Figure 1 shows a schematic picture of a device system for information on the contents of a cabinet.

Figure 2 shows a schematic picture of a cabinet equipped with a camera adapted to the invented procedure.

### Preferred embodiment of invention

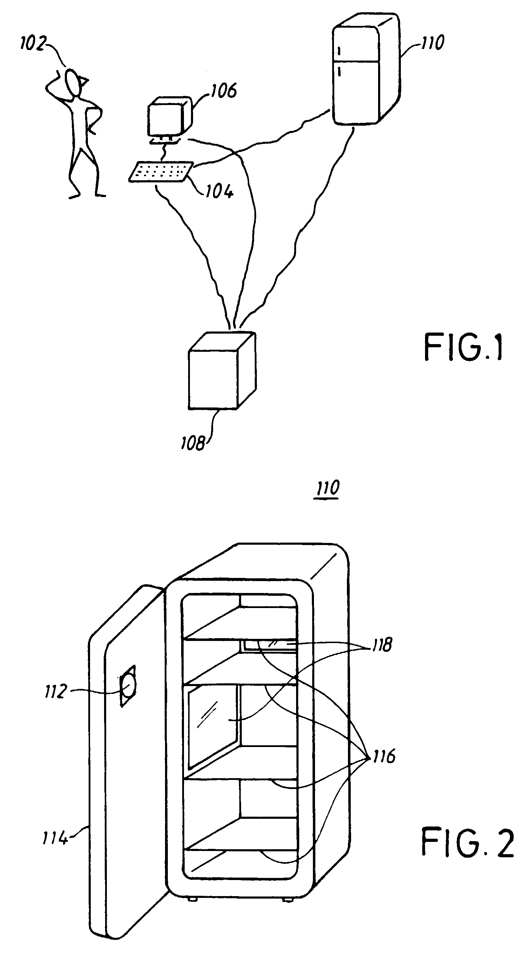

Figure 1 shows a schematic picture of components constituting device system 100 for getting information on the contents of a cabinet 110. The system 100 presupposes a user 102, and includes a computer terminal 104 and a display unit 106. The display unit 106 can be integrated with the terminal 104 or appear separately. Those two are connected to an image processing unit or analyser 108. This one is on its part connected to the cabinet, or particularly to a camera 112 of the cabinet 110, for the reason to get to know the contents of the cabinet. The connection between the terminal 106, the display unit 104, the image processing unit 108 and the cabinet 110 can be of different kinds such as wire connection, radio link or other means of communication. The connections between the different components do not necessarily have to be of the same kind.

Figure 2 shows a schematic picture of a cabinet 110 with a camera 112 attached to the cabinet. This has an openable door 114. In the cabinet 110 there is at least one shelf 116, intended for carrying articles. In some cases, the cabinet 110 can be provided with a number of mirrors 118 of different kinds. The camera 112 can be mounted on the inside of the door 114, or somewhere else in the cabinet 110 from where a general picture of the interior of the cabinet 110 can be shot.

The device system 100 includes the camera 112, which can be placed in the cabinet 110, or outside the cabinet. To get a god picture of the contents of the cabinet, mirrors 118 can be used oriented in angles so they show what is hidden behind some articles in the cabinet 110. In order to reduce the need of space, e.g. mirrors of Fresnel type can be attached to suitable plane surfaces in the cabinet 110. The device system also comprises means for signal transmission between the different parts therein, so there is contacts among them. This can be accomplished by wire, or wireless. Pictures will be obtained by means of the camera 112. The user 102 can decide how often pictures shall be taken, for example every time the cabinet door is opened, or every time an inquire is made in order to get a shopping list. It is possible to provide the camera 112 with angle orientation means acting synchronized with the picture shooting mechanism of the camera.

The picture taken is sent via the transmission means to the image processing unit 108 for analysing. This unit can be placed in the cabinet 110, or at a virtually other spot in the device system. In the image processing unit 108, the picture is transformed to a list of contents, registering what is in one picture or an image composed of several pictures. The list of contents will be compared with a standard list having registered items usually needed to be bought, thereby producing a purchase list. This list, the list of contents and the picture or the composed image can be presented somewhere else than at the cabinet 110, e.g. in a certain shop.

In the cabinet 110 there can be a camera of a kind giving digital pictures, but the camera can also be placed outside the cabinet 110, which gives the possibility to use the camera also for other purposes such as surveillance. In the cabinet 110, mirrors 118 can be placed in such a manner that the interior of the cabinet will be caught in one or more pictures. These can then be analysed by the aid of a computer program based in the image processing unit 108, or a specific computer operating in common for several users 102. Different lists can be presented by the computer program, among those one on the contents of the cabinet, a purchase list, i.e. articles needed, and the standard purchase list presenting what normally have to be bought. The communication between the user 102 and the cabinet 110 can take place via any type of electronic medium such as permanent wire connected telephone, mobile telephone, television, radio or internet connection.

To operate the device system, the user 102 can be at the cabinet 110, on another spot at home or somewhere else at the time he wishes to know, what goods there are in the cabinet, alternatively to get a purchase list showing the items to be bought. It is then necessary for the user 102 to have access to a terminal 104, so he can get in touch with the image processing unit 108 for his cabinet 110. Of course, it is not always necessary to be connected to the image processing unit 108 for the cabinet 110, in case there is a computer memory, storing information on the contents of the cabinet. The image processing unit 108 and/or the computer memory can be integrated into the cabinet 110, or the relevant information can be stored somewhere else, i.e. in a computer system by the cabinet supplier or at the place of a deliverer. When the user 102 has got in contact with the computer memory for contents of the cabinet 110, he can select from among a menu what he wishes the device system shall perform. The menu can include the following options:
- Show picture of the cabinet contents,
- Show a list of the cabinet contents,
- Compose a standard purchase list,
- Show purchase list and standard purchase list,
- miscellaneous.

In case the user 102 selects "Show picture of cabinet contents" on the display unit 106 such a picture is exposed. This occurs by way of the computer housing the memory for cabinet contents connects to the cabinet 110, and , by aid of the camera 112 in the cabinet 110, a picture is shot. The picture can be taken directly and transferred to the computer memory for cabinet contents, or a picture has been previously sent to the computer, however, at the earliest as the door 114 of the cabinet 110 was closed latest. From that information the latest known contents of the cabinet is obtained. The picture is presented in the display unit 106, and the user 102 gets an opinion about what is in the cabinet 110.

In case the user 102 selects "Show list of cabinet contents", a list of those articles present in the cabinet 110 is shown on the display unit 106. This is done out of a picture, or an image, directly upon the request to present a list of the cabinet contents. Alternatively, the image is already stored in the computer memory as is described above. The image will be sent to the image processing unit 108 and is then transformed to a list of cabinet contents including all articles to be found in the cabinet. From the image processing unit 108 this list is sent to the terminal unit 104. The list can then be exposed on the display unit 106.

In the case the user 102 selects "Compose a standard purchase list" this will occur in the following manner: The user 102 must write on the terminal unit 104, or on equivalent means, what is normally, or practically always, needed at every occasion. This list, the standard list, can be changed whenever, depending on if the purchase habits are changed. The user can on his display unit 106 always get access to the standard list of immediate interest.

In the case the user 102 selects "Purchase list and standard list" in the display unit 106, the purchase list is shown listing the goods to be bought. This can take place after that a comparison has been done in the computer between the list of cabinet contents and the standard list of what normally should be bought.

In the case the user 102 selects "Miscellaneous" on the display unit 106 there will be shown other services the device system 100 can offer. It is subject to the supplier of the device system 100 to determine, what else can be included.

To produce a picture of the cabinet contents a camera 112 having a "fisheye" lens takes a picture. To also register on the picture articles standing behind other goods on the shelves 116, mirrors 118 and/or several cameras can be used. The engagement of more than one camera will be described below. On the interior walls of the cabinet 110 and underneath the shelves 116, assuming these are of glass or of wire construction, slightly curved mirrors and/or mirror prisms can be attached, so a sequence of pictures can be exposed of all the contents of the cabinet 110. When the pictures have been taken, those are transferred to the image processing unit 108 for analysing so that it can be established, which articles there are on the shelves 116 in the cabinet 110.

In the situation when different mirrors are used in the cabinet, e.g. Fresnel type mirrors, the picture shot will be fragmented, and difficult for the user 102 to interpret. Thus, it is necessary to have a special unit, an image composing unit, producing a readable picture to be received by the user 102. This unit can be integrated in the cabinet 110, or in the image processing unit 108. The image composing unit analyses the pictures from the different mirrors and transforms these into one single image, which the user 102 more easily can grasp. Likewise, if more pictures are shot, said unit produces one image, including all information from the different pictures, to be understood by the user 102.

In a procedure where several pictures are taken one after the other by opening or closing the door 114 of the cabinet 110, the device system functions according to the following. The camera 112 and the mirrors 118 are attached in such a way that largest possible picture extent is acquired. The camera can be placed e.g. on the inside of the door 114, and by shooting several exposures at different opening angles during the time of opening or closing the door, a good coverage of the cabinet interior is achieved. The positions for taking the pictures can be automatically directed by one or more angular-sensors influencing the camera shutter.

In another embodiment of the invention several digital cameras are mounted in the cabinet 110 to get several pictures of the contents of the cabinet. The resulting several pictures are then manipulated in an image processing unit 108, comparing the pictures in order not to have the same article presented more than once in the resulting image. Moreover, the list of cabinet contents is produced in a manner corresponding to, what has been described above.

Further other embodiment of the invention are conceivable, such as taking the pictures through a moving lens, which via a flexible light guide is connected to a camera 112. This results in that the images will be more lucid. To further enhance the covered area of the cabinet interior, and so get as much as possible documented, movable mirrors and/or movable cameras can be installed in the cabinet. In a system environment with one cabinet camera being connected to a computer service, it is possible to "show" a new article in front of the camera, and then on a terminal keyboard write the name of the article, or any other identification, to have it registered for the future. An option is to take a picture of the bar code of the article . It is also foreseen that a common computer operator will register all goods his subscribers have an interest in.

Everywhere in this text when the word cabinet is used, it can equally mean cupboard or closet.

## Claims

1. Device offering information on the contents of a cabinet, cupboard or closet, comprising the cabinet, a camera, a display unit, an image processing unit and a computer, **characterized** in that the device is composed of the cabinet (110), at least one camera (112), which is mounted in the cabinet (110), on a door (114) of the cabinet (110) or adjacent to it, and that the camera (112) is connected to an image processing unit (108), a computer terminal (104) with an integrated or separate display unit (106), which computer terminal (104) is connected to the image processing unit (108).

2. Device according to claim 1, **characterized** in that one or more mirrors (118) are attached in the cabinet (110), and these mirrors (118) can be of Fresnel type.

3. Device according to claim 1 or 2, **characterized** in that pictures taken by the camera (112) are transferred to the image processing unit (108), which transforms the pictures into, for a user (102) more easily construed images.

4. Device according to any of claims 1 to 3, **characterized** in that communication between the computer terminal (104), the display unit (106), the cabinet (110), the image processing unit (108) takes place by means of stationary wire or radio waves.

5. Device according to any of claims 1 to 4, **characterized** in that the camera (112) is placed in such a way that a survey picture of the interior of the cabinet (110) can be obtained.

6. Device according to any of claims 1 to 5, **characterized** in that the camera (112) is movable in the cabinet (110).

7. Device according to any of claims 1 to 6, **characterized** in that it comprises an angular-sensor, which is connected to the shutter of the camera (112).

8. Device according to any of claims 1 to 7, **characterized** in that the camera (112) has a lens of "fisheye" type.

9. Device according to any of claims 1 to 8, **characterized** in that several cameras (112) are installed in the cabinet (110), on the door (114) of the cabinet (110) or adjacent to it, in order to depict the contents of the cabinet (110).

10. Procedure for establishing the contents of a cabinet, **characterized** in that a camera (112) placed in the cabinet (110), on a door (114) of the cabinet (110) or its vicinity takes one or more pictures of the contents of the cabinet (110), which pictures are then transferred to one, to the camera (112) connected, image processing unit (108), which via a computer terminal (104) transfers generated images to a display unit (106) built into the computer terminal (104), or being separated therefrom, whereupon the computer terminal (104) produces a list of contents, which is then converted into a purchase list shown on the display unit (106).

11. Procedure according to claim 10, **characterized** in that the list of contents is presented on the display unit (106), before it is converted into a purchase list.

12. Procedure according to claim 10 or 11, **characterized** in that from a menu shown on the display unit (106) a user (102) can choose to have different pictures of the cabinet contents exposed on the display unit (106), or as an option a list of what needs to be purchased.

13. Procedure according to claim 12, **characterized** in that a standard shopping list can be fed into the computer terminal (104), and then presented on the display unit (106).

14. Procedure according to claim 13, **characterized** in that the user (102), whenever he wishes, can make changes in the standard shopping list as presented on the display unit (106).

15. Procedure according to claim 10, **characterized** in that the image processing unit (108) transforms the pictures taken by the camera (112) into images, presented on the display unit (106) in a form, to be easily construed by the user (102).

16. Procedure according to claim 10, **characterized** in that every time a door (114) of the cabinet (110) is opened, the camera (112) takes pictures of the cabinet contents.
